# EUROPEAN PATENT SPECIFICATION

(11) **EP 1 326 046 B1**
(45) Date of publication and mention of the grant of the patent: **25.07.2007**
(21) Application number: 03000134.1
(22) Date of filing: 03.01.2003
(51) Int. Cl.: F16L 37/23, F16L 37/56

(54) **Manual multicoupling system for cryogenic medium filling**
Manuelles Multikupplungssystem für kryogenische Flüssigkeit
Coupleur manuel multiple pour fluide cryogenique

(30) Priority: 07.01.2002 DE 20200157 U
(43) Date of publication of application: 09.07.2003
(73) Proprietor: YARA International ASA, 0202 Oslo (NO)
(72) Inventor: Grimsland, Aage, 3269 Larvik (NO); Grelle, Friedrich, 42799 Leichlingen (DE); Loos, Helmar, 96120 Bamberg (DE)
(74) Representative: Bleukx, Lucas Lodewijk M.

(56) References cited:
- CH-A- 349 461
- US-A- 3 704 002
- US-A- 4 214 780
- US-A- 4 679 956

## Description

The present invention concerns the technical field of filling insulated containers, in particular transport insulated cooling containers with a cryogenic medium such as solid carbon dioxide (CO₂) from a liquid source as a product for the production of cold. Typically, a specifically dedicated inner part of such insulated containers a compartment or "cold cell" is dedicated to contain the cooling agent, e.g. CO₂ by keeping it separate from the product transported inside the insulated container.

Solid carbon dioxide, normally called dry ice, is used to maintain cold in the product, namely food or perishables, inside insulated containers during transport and during waiting times.

Dry ice in cold cells of this type is produced in particular by these cold cells being filled with CO₂ from a liquid source. In connection with expansion and depressurisation to atmospheric pressure, dry ice is produced in addition to CO₂ gas. The dry ice then represents a cold storage mass.

The dry ice, at a temperature of -78.9°C, sublimates, i.e. it goes directly from a solid state to a gaseous state of aggregation without forming a liquid phase.

The sublimation heat at -78.9°C is 573 kJ/kg. When the carbon dioxide gas produced is heated to 0°C, the total refrigerating capacity is 645 kJ/kg. This refrigerating capacity is used to compensate for the incident heat in the transport containers during transport and storage and thus to guarantee compliance with the cold chain.

The dry ice required can be added in the form of pressed blocks, discs or pellets or by injecting carbon dioxide from a liquid CO₂ source.

Regardless of the method of application, the cold cells are filled in a filling station at which the cold cells are connected to containers or tanks containing the liquefied CO₂. In such a filling station, the cold cells are first connected to corresponding CO₂ tanks. The connection to the CO₂ tanks may, for example, be created using pipes or hoses fitted with solenoid valves, flow and temperature indicators or other prior art devices of this type.

As soon as the cold cells or containers are connected to the corresponding CO₂ tanks, the liquid CO₂ is fed to the cold cells. When it enters the cold cells, the liquid gas expands and forms partially dry ice and partially gas that must be immediately extracted from the cold cells. The temperature of the liquid CO₂ is minus 30°C to minus 20°C. At the expansion point of the liquid, a temperature of roughly minus 79°C is produced.

When the liquid carbon dioxide, which is stored refrigerated, expands into the cold cell specially developed for this purpose, approximately 50-60% of the injected quantity becomes dry ice and 40-50% becomes gaseous carbon dioxide, depending on the storage pressure.

The dry ice is distributed and compressed in the cold cell by specially developed assemblies in combination with the design of the injection device. This is necessary to guarantee the correct emission of cold, in terms of time and location, to the interior of the insulated transport container and thus to the stored or transported product.

The gaseous carbon dioxide produced on injection, 40-50% of the total quantity, must be extracted via suitable devices in order to prevent an impermissible concentration of the carbon dioxide in the atmosphere of the working premises. To this end, assemblies were installed in the cold cell that allows the gas to be separated from the solids, a precondition for loss-free dry ice apportioning.

In a typical filling process, lasting for approximately 15 seconds to 90 seconds and assuming constant gas production over the entire period, as much as 150 litres of gas must be extracted per second.

It is obvious that the extraction of the gas produced in the cold cells plays a very important role in the entire filling process. If the gas is extracted too slowly or not at all, or if the extraction of the gas is interrupted, the filling process must also be interrupted. The room air could develop too high a concentration of CO₂, which is harmful to health in extreme cases.

Various solutions have been proposed in the prior art for the extraction of the gas produced during the filling process in the cold cell. One proposal, for example, was for extraction devices such as extraction pumps to be connected to one wall of the cold cell. Another proposal was to create openings in the upper area of the cold cell through which the gas can flow out. Moreover, cooling containers were proposed that consist of a case that is suitably porous at least in places so that the majority of the gas produced can flow out.

The various solutions in the prior art for extracting the gas produced are unsatisfactory for various reasons.

Firstly, the installation of an additional extraction pump on one wall of the cold cell is technically fairly complicated and fairly time-consuming. Secondly, even if the installation of such an additional extraction pump were without problems, it would not be possible to control the filling and extraction functions simultaneously. Automatic interruption of the filling process in the event of insufficient extraction of the gas produced would therefore not be possible either. With the filling devices in the prior art for which no additional extraction devices are provided, no sufficient outflow of the gas is achieved in most cases.

WO 99/43996 discloses a fill and bleed module for carbon dioxide in a refrigerating module assigned to a refrigerating container. The fill and bleed openings are

Arranged in a common housing, where the fill opening is provided with an electromagnetic device for attachment to the refrigerating container. The fill and bleed openings are arranged with protruding parts that have to be entered into corresponding openings in the refrigerating container. This solution requires that the module is entered in a parallel and even manner to engage the two openings of the refrigerating container simultaneously. Further, the electromagnetic fixation of the module may be exposed to failure if the electric circuit fails or unwanted materials such as dry ice/snow accumulates on its connecting parts.

US 5,657,642 discloses an apparatus for cooling food products in a container, where the apparatus is provided with a supply structure for supplying liquid carbon dioxide into the interior of the container and a withdrawing structure for withdrawing carbon dioxide vapours from the container. The withdrawing structure can be coaxially arranged with respect to the supply structure. The connection between the apparatus and the container is provided by a flanged part of the withdrawing structure that than be secured to the container by means of bolts. When filling containers, the apparatus that is provided with wheels is moved towards the container to be filled. This may involve certain efforts with regard to the positioning of the apparatus (that comprises tank with liquefied CO2, condensing circuit etc.) with respect to the container. Further, as there is no provision with regard to height adjustments of the apparatus, the filling operation has to be carried out on a very even floor. Still further, the securing operation of the flange by means of bolts will be time consuming.

US 3 704 002 describes a readily connectable and disconnectable coupling with a first member adapted to be connected to a source of fluid under pressure and a second member adapted to be connected to a fluid consuming or control unit. The members are coupled together by abutment members associated with one member each engaging a groove formation in the other member. The coupling must be rotated to seal the two members. From US 4 579 956 it is known a coupling device for connecting a work tool to a support that provides a quick disconnect for electrical and fluid connections and is characterized by the use of two separable members which can be locked together through a ball cage and lock ring arrangement. None of these documents describe solutions that are adapted to be used for cryogenic operation with phase transfer while connected, thus with a two-phase fluid flow in opposite directions.

From US 4 214 780 it is known a rotatable multiple pipe coupling structure employing a labyrinth seal between each stationary pipe and its respective rotatable pipe. This is not a quick release coupling and has no possibility of fulfilling the functionality for use with a cryogenic medium. CH 349 461 describes a pipe coupling consisting of a coupling device and a counter -coupling device. The coupling has a bushing that can be inserted into a sleeve of the counter- coupling element and has at least one outlet opening. A ball-locking device is used to couple the coupling device to the counter- coupling device. It is used for a fluid as water, oil or pressurised air. It could not be used for a two-phase fluid flow in opposite directions.

Consequently, it is the task of the present invention to eliminate the above disadvantages.

The invention that performs this task comprises firstly a multicoupling system in accordance with claim 1. It is a coupling device for a multicoupling system to fill a container/cold cell with a cryogenic medium, in particular CO2. The coupling device can be connected to a tank containing the liquefied gas (liquid CO2), and can be coupled to a countercoupling element that can be fixed to the cold cell and has a bushing for passing through the cryogenic medium that can be inserted in a sleeve of the countercoupling element and at least one extraction opening.

It should be understood that the term "filling" as applied here may involve filling in part or filling completely, depending on the actual conditions.

The multicoupling system developed is fitted with an exhaust gas duct via which, after connection to the cold cell, the cold gas produced is extracted to the exhaust gas system adapted to the entire system. The exhaust gas duct is designed in such a way that icing in connection with long-term operation of the system is excluded.

In a preferred embodiment, the coupling device is fitted with a ball-locking device that is used to couple the coupling device to the countercoupling element. This embodiment implies a secure connection that is simple to operate.

In another preferred embodiment, the coupling device has a proximity switch that is in a first switching state when the coupling device is coupled to the countercoupling element and is in a second switching state otherwise. The proximity switch prevents impermissible initiation of the cryogenic medium such as carbon dioxide injection before a safe connection is established. If the connection is interrupted, the supply of cryogenic medium is automatically stopped.

In another preferred embodiment, the ball locking device of the coupling device is fitted with an unlocking device that, in the event of excessive axial forces occurring between the coupling device and the countercoupling element, separates the ball locking device from the countercoupling element. The connection between the coupling device and the countercoupling element is thus broken without damaging the connection hose if the insulated container is driven away when still connected. The function of this embodiment is to safeguard unwanted release of the pressurised medium in relation to accidents or inappropriate use of the equipment.

Various other characteristics of the present invention are contained in the following description, which refers to the drawings, which relate to examples of embodiments of the present invention without limiting the scope of protection of the present invention.
- Fig. 1: is a perspective view of the multicoupling system in accordance with the present invention,
- Fig. 2: is another perspective view of the multicoupling system in accordance with the present invention,
- Fig. 3: is a diagrammatic view of a filling device in which the multicoupling system in accordance with the present invention is used.

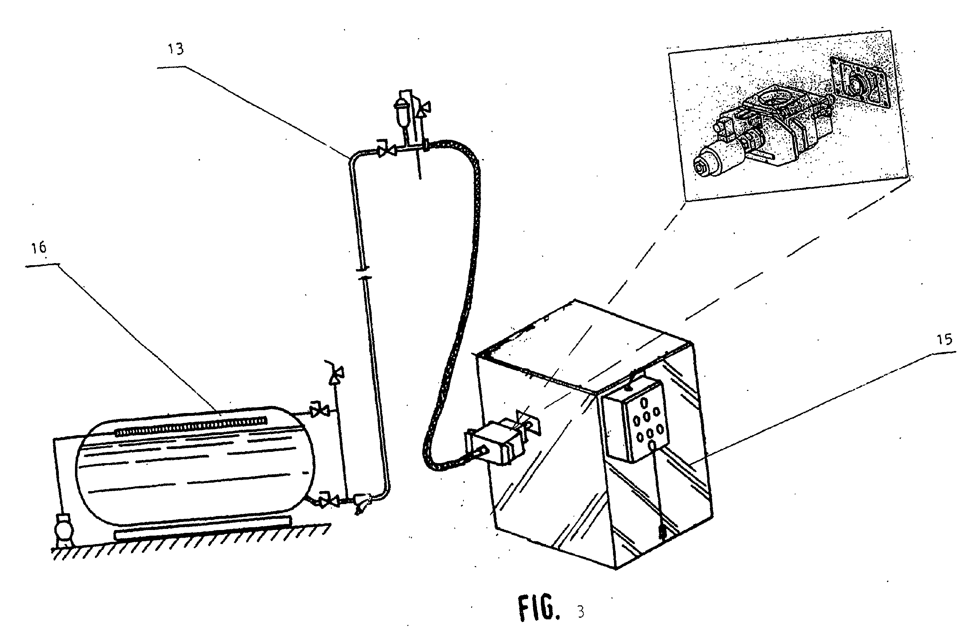

Fig. 3 discloses an insulated container 15 having a cryogenic compartment or cold cell (not shown) that, in order to be filled with cryogenic medium (CO₂), is connected to a tank 16 containing the liquid CO₂.

The compartment or the cold cell in the container 15 can be connected to a CO₂ tank, for example, by means of pipes or hoses 13 that can be fitted with devices such as solenoid valves, flow or temperature indicators or other prior art devices of this type. These devices do not form part of the present invention and will therefore not be explained in further detail.

To couple the pipe 13 emanating from the CO₂ tank 16 to the cold cell/container 15, a coupling system 20 in accordance with the present invention is used.

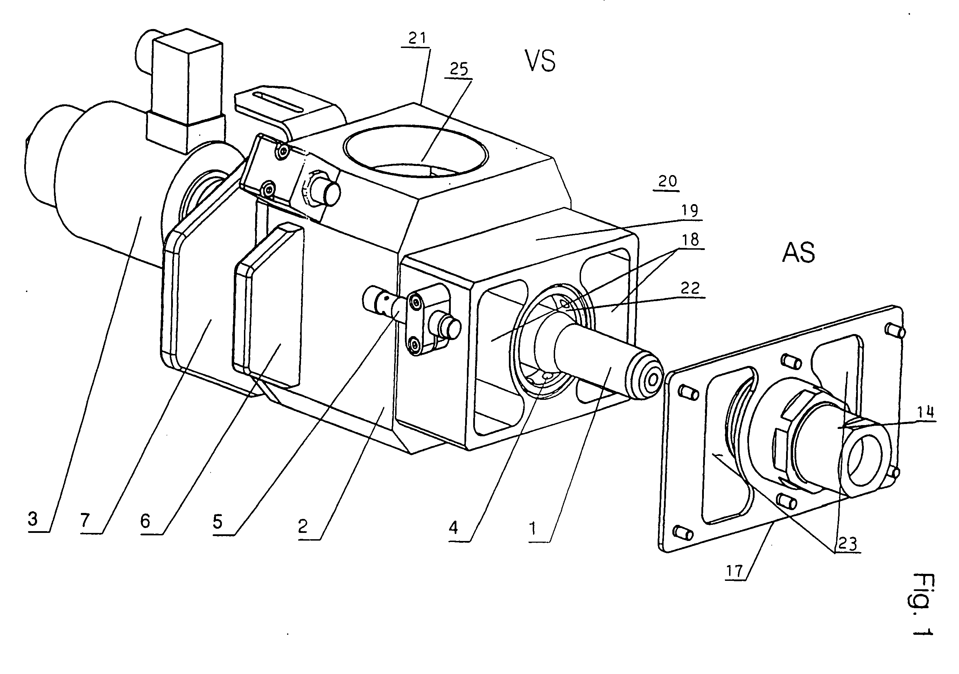

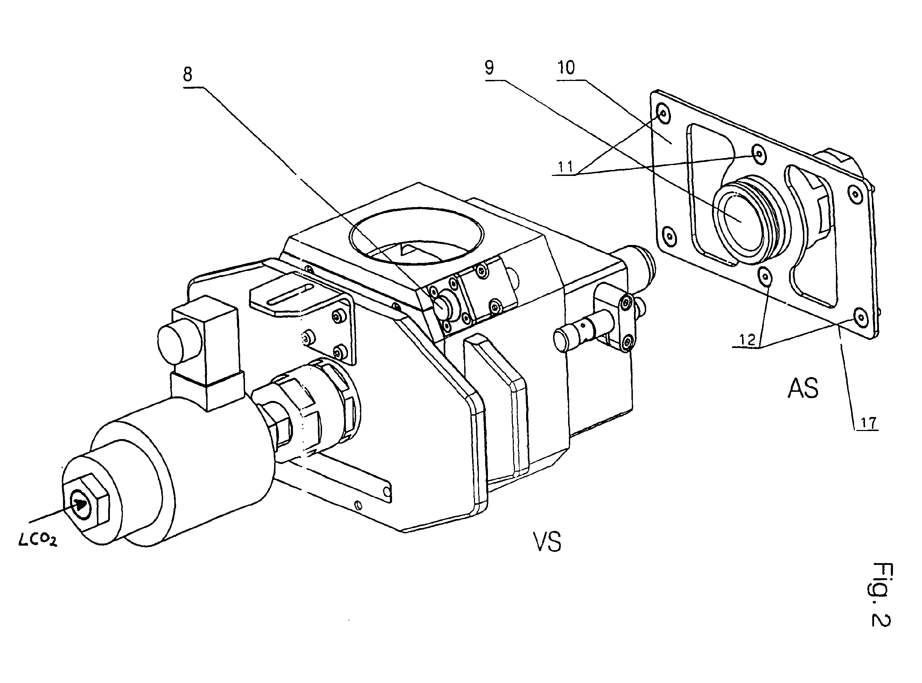

To this end, the coupling system 20 shown in Figures 1 and 2 consists of two parts that can be coupled, a supplier part 21 (also called a coupling device in the following) and a consumer part 17 (also called a countercoupling element in the following). The coupling device 21 is connected to the end of the pipe 13. The countercoupling element 17 is fixed to the container or to the cold cell.

For connection to the end of the pipe 13, the coupling device 21 is fitted with a solenoid valve 3. The countercoupling element 17 has a support plate 10 that can be fixed to one wall of the container/cold cell.

In a preferred embodiment, the support plate 10 of the countercoupling element 17 has openings 12 that are used to receive corresponding displayed screws 11 that are screwed to the wall of the container/cold cell 15.

As explained in further detail in the following, the multicoupling system 20 shown in Figures 1 and 2 allows the removal/extraction of the gas produced during the filling process.

To this end, extraction openings 23 are provided in the support plate 10 of the countercoupling element 17, through which the gas can flow out. A corresponding opening, not shown in the figures, must be created in the wall of the container/cold cell 15. When the countercoupling element 17 is fixed to the wall of the container/cold cell 15, the extraction openings 23 provided in the support plate 10 are brought into flow connection with the opening created in the wall of the container/cold cell 15.

Moreover, the opening created in the wall of the container/cold cell must allow the passage of a pipe 14 provided for passing the liquid CO₂ into the container/cold cell 15. This pipe 14 is permanently connected to a locking sleeve 9 provided on the side of the support plate 10 facing the coupling device 21. To fill the container/cold cell 15, a bushing 1 of the coupling device 21 is inserted in this locking sleeve 9. This bushing 1 extends from the side of the coupling device facing the countercoupling element 17, passes through the housing 2 of the coupling device 21 and is connected to the solenoid valve 3.

The side of the housing 2 of the coupling device 21 facing the countercoupling system has a front part 19. This front part 19 has an opening 22 through which the insertable bushing 1 passes. This opening 22 contains a ball-locking device 4 that is used to couple the coupling device 21 to the countercoupling element 17. The locking sleeve 9 of the countercoupling element has preferably an annular recess, into which the balls are settled in their locking position.

In a preferred embodiment, this ball locking device 4 is provided with an unlocking device not shown in Figures 1 and 2 that, in the event of excessive axial forces occurring between the coupling device 21 and the countercoupling element 17, separates the ball locking device 4 from the locking sleeve 9. The unlocking device can in one embodiment imply that the balls are resiliently supported in their support structure. At high tensile loads, the balls will be allowed to retract away from their locking position, and followingly the coupling device and the countercoupling element can be separated.

Furthermore, the front part 19 of the housing 2 of the coupling device 21 contains two extraction openings 18 that surround the opening 22. When the coupling device 21 is coupled to the countercoupling element 17, these extraction openings 18 are brought into flow connection with the two corresponding extraction openings 23 provided in the support plate 10 of the countercoupling element 17 so that an extraction line is created from the cooling container 15 into the coupling device 21.

This extraction line, not shown in the figures, ends in a connection point 25 in the upper area of the housing 2 of the coupling device 21 to which an extraction fan not shown in the figures can be connected to extract the gas.

In order to make it easier to handle the coupling device 21, it has two plates 7 that are located in the rear area of the housing 2 and extend to the left and right from the housing. Left and right here correspond to the sides from which the plate extends and are operated with the left and right hands respectively.

Moreover, the coupling device 21 has two handles 6 that are arranged opposite each plate and can be moved. Operation and release of the handles 6 causes the ball-locking device 4 to be unlocked/locked. In principle, such types of ball locking mechanisms are known in the prior art in connection with other applications. For instance, the ball locking principle is applied at technical areas such as couplings for transmitting pressurized air between a compressor and a hose, and will therefore not be further described here.

A proximity switch 5 is provided to check the coupling of the ball-locking device 4 in the locking sleeve 9 and the coupling of the coupling device 21 to the countercoupling element 17. A proximity switch of any prior art type can be selected for this purpose. It is important only that the switch selected is in a first switching state when the coupling device is correctly coupled to the countercoupling element and is in a second switching state otherwise.

For example, it is possible to select a proximity switch that is pressed by the support plate 10 when the coupling device 21 is coupled to the countercoupling element 17 and is released when the coupling device 21 is decoupled from the countercoupling element 17.

Finally, the coupling device 21 can be fitted with a pushbutton 8 that initiates the filling/extraction process when it is activated.

In the following, a brief description of the coupling/decoupling operations is provided, assuming that the coupling device 21 is connected to the CO₂ tank 16/the pipe 13 and the countercoupling element 17 is fixed to the cooling container 15.

Firstly, the handles 6 are pulled against the plates 7. This releases the balls of the ball-locking device 4. Then the bushing 1 is inserted as far as it will go into the locking sleeve 9 and both the handles 6 and the plates 7 are released. The locking device is activated by releasing the handles 6. It should be understood that the dimensions of the bushing 1 and the corresponding sleeve 9 are preferably mutually adapted in such a manner that this in fact secure a sufficient sealing between the two said parts.

In the event of correct coupling of the ball-locking device 4 in the locking sleeve 9, the proximity switch 5 emits a signal. It is possible that no signal is emitted.

If the signal is emitted, the filling and extraction process can be initiated by activating the pushbutton 8.

When the liquid CO₂ expands in the cooling container, both dry ice and gas are produced. The gas produced can flow out during the filling process through the extraction openings 23 of the countercoupling element 17 and through the extraction openings 18 of the coupling device 21 and can be extracted by the extraction fan connected to the opening 25 in the housing 2.

As soon as the desired quantity of dry ice is achieved in the cooling container, the filling process is automatically stopped by a timer in the control.

Finally, the coupling device 21 is decoupled from the countercoupling element 17 by the handles 6 again being pulled against the plates 7. The coupling device 21 can then be removed from the countercoupling element 17 and can, if required, be connected to another countercoupling element fixed to another cooling container, thus enabling a new filling/extraction process to be initiated.

When using the multicoupling system in accordance with the present invention described above, the filling and extraction functions can, of course, be controlled and completed simultaneously. This has the advantage that filling cannot take place without extraction. It is also particularly advantageous that additional extraction devices, the use of which is both fairly complicated and expensive, are no longer required.

Moreover, the use of the proximity switch ensures that filling without proper coupling is not possible.

The multicoupling system in accordance with the present invention can be operated simply and without great strength. However, it also withstands the counterpressure produced during injection.

The integration of the multicoupling system in the overall apportioning station set up for the process, including gas extraction, electrical control and positioning of the insulated containers or cold cells during filling with dry ice, is not complicated. It should be understood that the cold cell can be filled separately outside the container or in situ while it is arranged in the container.

Finally, a certain degree of safety is achieved because, if the tensile load between the coupling device and the countercoupling element becomes too high, the ball-locking device is automatically released from the countercoupling element.

The present invention is not limited to the embodiment examples described above. Rather, a very wide range of variations on these examples can be created without leaving the framework of the present invention.

It should be understood that the materials used in accordance with the multicoupling system can be any appropriate material. Preferably, such material is non-sticking or non-condensing and made out of plastics material.

## Claims

1. A multicoupling system (20) to fill a container (15) with a cryogenic medium, the multicoupling system (20) has a coupling device (21) that can be connected to a tank containing a cryogenic medium such as liquefied gas and a countercoupling element (17) that can be coupled to this coupling device and can be fixed to a container/cold cell (15), the coupling device has a bushing (1) for passing through the cryogenic medium in liquid state that can be inserted in a sleeve (9) of the countercoupling element, where
both the coupling device (21) and the countercoupling element (17) have at least one extraction opening (18, 23), and where these extraction openings(18,23) are brought into flow connection with each other when the coupling and
countercoupling elements are coupled to each other, **characterized in that** two extraction openings are present that are provided in the front part of the coupling device and in the support plate of the countercoupling element respectively, the two extraction openings of the coupling device and the two extraction openings of the countercoupling element surround the opening in the front part and the sleeve of the countercoupling element and are brought into flow connection when the coupling device is coupled to the countercoupling element.

2. A multicoupling system in accordance with claim 1,
**characterised by** a ball-looking devices (4) that is used to couple the coupling device to the countercoupling element.

3. A multicoupling system in accordance with claim 1 or 2,
**characterised by** a proximity switch (5) that is in a first switching state when the coupling device is coupled to the countercoupling element and is in a second switching state otherwise.

4. A multicoupling system in accordance with at least one of claims 2 to 3,
**characterised by** an unlocking device that releases the ball locking device from the countercoupling element if the tensile load between the coupling device and the countercoupling element becomes too high.

5. A multicoupling system in accordance with one of claims 1 to 4,
**characterised in that** the housing (2) has a front part (19) that has an opening (22) through which the insertable bushing passes, and the countercoupling element has a support plate (10) that is adapted to be fixed to one wall of the container.

6. A multicoupling system in accordance with claim 1,
**characterised in that** the two extraction openings in the coupling device and the two extraction openings in the countercoupling element are shaped like segments of circles.

7. A multicoupling system in accordance with one of claims 5 to 6,
**characterised in that** the ball locking device is provided in the opening in the front part of the coupling device and surrounds the insertable bushing,

8. A multicoupling system in accordance with one of claims 1 to 7,
**characterised in that** the coupling device has two plates (7) that are used to handle the coupling device.

9. A multicoupling system in accordance with one of claims 2 to 8,
**characterised in that** the coupling device has two handles (6) that are arranged in such a way that they can be moved, and operating and releasing the handles causes the ball locking device to be unlocked and locked.

10. A multicoupling system in accordance with one of claims 1 to 9,
**characterised in that** the coupling device has a pushbutton (8) for initiating a filling and extraction process.

11. A multicoupling system in accordance with one of claims 5 to 10,
**characterised in that** the support plate has fixing openings.

## Patentansprüche

1. Multikopplungssystem (20) zum Füllen eines Containers (15) mit einem Tieftemperaturmedium, wobei das Multikopplungssystem (20) eine Kopplungsvorrichtung (21), die mit einem Tank, der ein Tieftemperaturmedium wie beispielsweise verflüssigtes Gas enthält, verbunden werden kann und ein Gegenkopplungselement (17) umfasst, das an die Kopplungsvorrichtung gekoppelt werden kann und an einer Container/Kühlzelle (15) befestigt werden kann, wobei die Kopplungsvorrichtung eine Buchse (1) zum Durchführen des Tieftemperaturmediums in flüssigem Zustand aufweist, die in eine Hülse (9) des Gegenkopplungselements eingebracht werden kann, bei dem beide, die Kopplungsvorrichtung (21) und das Gegenkopplungselement (17) wenigstens eine Extraktionsöffnung (18, 23) aufweisen, und bei der diese Extraktionsöffnungen (18, 23) miteinander in eine Fliessverbindung gebracht werden, wenn die Kopplungs- und Gegenkopplungselemente miteinander gekoppelt sind, **dadurch gekennzeichnet, dass** zwei Extraktionsöffnungen vorgesehen sind, die jeweils in dem Vorderbereich der Kopplungsvorrichtung und in der Unterstützungsplatte des Gegenkopplungselements angeordnet sind, wobei die zwei Extraktionsöffnungen der Kopplungsvorrichtung und die zwei Extraktionsöffnungen des Gegenkopplungselements die Öffnung in dem Vorderbereich und die Hülse des Gegenkopplungselements umgeben und in eine Fliessverbindung gebracht werden, wenn die Kopplungsvorrichtung an das Gegenkopplungselement gekoppelt ist.

2. Multikopplungssystem nach Anspruch 1, **dadurch gekennzeichnet, dass** eine Kugel-Verriegelungsvorrichtung (4) verwendet wird, um die Kopplungsvorrichtung und das Gegenkopplungselement zu koppeln.

3. Multikopplungssystem nach Anspruch 1 oder 2, **dadurch gekennzeichnet, dass** sich ein Annäherungsschalter (5) in einem ersten Schaltzustand befindet, wenn die Kopplungsvorrichtung an das Gegenkopplungselement gekoppelt ist und sich andernfalls in einem zweiten Schaltzustand befindet.

4. Multikopplungssystem nach wenigstens einem der Ansprüche 2 bis 3, **dadurch gekennzeichnet, dass** eine Entriegelungsvorrichtung die Kugel-Verriegelungsvorrichtung von dem Gegenkopplungselement entriegelt, wenn die Zugbelastung zwischen der Kopplungsvorrichtung und dem Gegenkopplungselement zu hoch wird.

5. Multikopplungssystem nach einem der Ansprüche 1 bis 4, **dadurch gekennzeichnet, dass** das Gehäuse (2) einen Vorderbereich (19) aufweist, der eine Öffnung (22) aufweist, welche die einbringbare Buchse durchläuft, und das Gegenkopplungselement eine Unterstützungsplatte (10) aufweist, die angepasst ist, um an einer Wand des Containers befestigt zu sein.

6. Multikopplungssystem nach Anspruch 1, **dadurch gekennzeichnet, dass** die zwei Extraktionsöffnungen in der Kopplungsvorrichtung und die zwei Extraktionsöffnungen in dem Gegenkopplungselement wie Segmente eines Kreises gestaltet sind.

7. Multikopplungssystem nach einem der Ansprüche 5 bis 6, **dadurch gekennzeichnet, dass** die Kugel-Verriegelungsvorrichung in einer Öffnung in dem Vorderbereich der Kopplungsvorrichtung vorgesehen ist und die einbringbare Buchse umgibt.

8. Multikopplungssystem nach einem der Ansprüche 1 bis 7, **dadurch gekennzeichnet, dass** die Kopplungsvorrichtung zwei Platten (7) aufweist, die verwendet werden, um die Kopplungsvorrichtung zu behandeln.

9. Multikopplungssystem nach einem der Ansprüche 2 bis 8, **dadurch gekennzeichnet, dass** die Kopplungsvorrichtung zwei Griffe (6) aufweist, die so angeordnet, dass sie bewegt werden können, und ein Betreiben und Lösen der Griffe bewirkt, dass die Kugel-Verriegelungssvorrichtung entriegelt und verriegelt wird.

10. Multikopplungssystem nach einem der Ansprüche 1 bis 9, **dadurch gekennzeichnet, dass** die Kopplungsvorrichtung einen Druckknopf (8) zum Initiieren eines Füll- und Extraktionsprozesses aufweist.

11. Multikopplungssystem nach einem der Ansprüche 5 bis 10, **dadurch gekennzeichnet, dass** die Unterstützungsplatte Befestigungsöffnungen aufweist.

## Revendications

1. Système de multi-couplage (20) pour remplir un conteneur (15) avec un milieu cryogénique, le système de multi-couplage (20) étant doté d'un dispositif de couplage (21) qui peut être raccordé à un réservoir contenant un milieu cryogénique comme un gaz liquéfié et d'un élément de contre-couplage (17) qui peut être couplé audit dispositif de couplage et peut être fixé à un récipient/cellule froide (15), le dispositif de couplage ayant une douille (1) pour passer à travers le milieu cryogénique à l'état liquide qui peut être inséré dans un manchon (9) de l'élément de contre-couplage, dans lequel le dispositif de couplage (21) et l'élément de contre-couplage (17) ont au moins une ouverture d'extraction (18, 23) et dans lequel ces ouvertures d'extraction (18, 23) sont mises en connexion fluidique l'une avec l'autre quand les éléments de couplage et de contre-couplage sont raccordés l'un à l'autre, **caractérisé en ce que** deux ouvertures d'extraction sont présentes et ménagées dans la partie avant du dispositif de couplage et dans la plaque de support de l'élément de contre-couplage respectivement, les deux ouvertures d'extraction du dispositif de couplage et les deux ouvertures d'extraction de l'élément de contre-couplage entourant l'ouverture dans la partie avant et le manchon de l'élément de contre-couplage et étant mis en connexion fluidique quand le dispositif de couplage est raccordé à l'élément de contre-couplage.

2. Système multi-couplage selon la revendication 1, **caractérisé par** un dispositif de verrouillage à bille (4) qui est utilisé pour raccorder le dispositif de couplage à l'élément de contre-couplage.

3. Système multi-couplage selon la revendication 1 ou 2, **caractérisé par** un commutateur de proximité (5) qui est dans un premier état de commutation quand le dispositif de couplage est raccordé à l'élément de contre-couplage et est dans un second état de commutation autrement.

4. Système multi-couplage selon au moins une des revendications 2 à 3, **caractérisé par** un dispositif de déverrouillage qui libère le dispositif de verrouillage à bille de l'élément de contre-couplage si la charge de traction entre le dispositif de couplage et l'élément de contre-couplage devient trop élevée.

5. Système de multi-couplage selon l'une quelconque des revendications 1 à 4, **caractérisé en ce que** le logement (2) a une partie avant (19) qui présente une ouverture (22) à travers laquelle passe le douille d'insertion, et l'élément de contre-couplage a une plaque de support (10) qui est adaptée pour être fixée à une paroi du récipient.

6. Système de multi-couplage selon la revendication 1, **caractérisé en ce que** les deux ouvertures d'extraction dans le dispositif de couplage et les deux ouvertures d'extraction dans l'élément de centre-couplage en forme de segments de cercles.

7. Système de multi-couplage selon l'une quelconque des revendications 5 à 6, **caractérisé en ce que** le dispositif de verrouillage à bille est ménagé dans l'ouverture dans la partie avant du dispositif de couplage et entoure la douille d'insertion.

8. Système de multi-couplage selon l'une quelconque des revendications 1 à 7, **caractérisé en ce que** le dispositif de couplage a deux plaques (7) qui sont utilisées pour manipuler le dispositif de couplage.

9. Système de multi-couplage selon l'une quelconque des revendications 2 à 8, **caractérisé en ce que** le dispositif de couplage a deux poignées (6) qui sont disposées de telle manière qu'elles puissent être déplacées, et que l'actionnement et le relâchement des poignées provoquent le déverrouillage et le verrouillage du dispositif de verrouillage à bille.

10. Système de multi-couplage selon l'une quelconque des revendications 1 à 9, **caractérisé en ce que** le dispositif de couplage a un bouton poussoir (8) pour lancer un processus de remplissage et d'extraction.

11. Système de multi-couplage selon l' une quelconque des revendications 5 à 10, **caractérisé en ce que** la plaque de support a des ouvertures de fixation.
